# EUROPEAN PATENT SPECIFICATION

(11) **EP 2 218 954 B1**
(45) Date of publication and mention of the grant of the patent: **22.10.2014**
(21) Application number: 10382007.2
(22) Date of filing: 14.01.2010
(51) Int. Cl.: F16L 3/23, F16L 3/24, F16L 3/10, A47B 96/14

(54) **Support device for conduits or wirings**
Haltevorrichtung für Leitungen oder Verkabelungen
Dispositif support pour des conduites ou des câblages

(30) Priority: 12.02.2009 ES 200900390
(43) Date of publication of application: 18.08.2010
(73) Proprietor: J. van Walraven Holding B.V., 3641 RK Mijdrecht (NL)
(72) Inventor: Yanguas Llobet, David, 08192 Sant Quirze del Valles (ES)
(74) Representative: EP&C

(56) References cited:
- WO-A1-98/46921
- DE-A1- 4 013 690
- DE-U- 29 503 361
- FR-A1- 2 677 430
- FR-A1- 2 873 905
- GB-A- 1 577 726
- JP-A- 10 038 146
- US-A1- 2003 102 412

## Description

### Technical Field of the Invention

The invention relates to a support device for conduits or wirings intended for being firmly fixed to a guide rail. The invention also relates to a support system of conduits or wirings comprising a guide rail, at least one support device according to the invention and suitable means for their mutual fixing.

### Background of the Invention

Different solutions are known today for the fixing of conduits, for example of fluid pipes, to walls, in which guide rails on which support clamps or the like for said conduits are fixed are used.

The known solutions present certain drawbacks relating both to the clamps and to the fixing system used for their fixing to the guide rails.

A main objective of the present invention is to disclose a simple support device which, made of a metal material, lacks welds and elements which can damage the supported conduits. It is particularly interesting that the device is provided with a closing system to prevent the conduits from being able to come out of the device, said closing system being simple and at the same time secure for preventing accidental opening.

In addition, the support device must be able to be fixed in a simple manner to a guide rail, being easily replaceable with another device as needed, and at different heights of said guide rail.

It is also interesting that the support device is provided with suitable means for facilitating the sealing of the supported conduits, without having to renounce a constructive simplicity that reduces manufacturing costs.

The patent document US2003/102412A1 discloses a fastening device for elongated objects such as pipes, cables or the like comprising a fastening member, a hook-shaped receiving member and a bridging member, pivontingly connected with one end of the fastening member and connectable to the free end of the receiving member.

### Disclosure of the Invention

The support device for conduits or wirings object of the invention meets the aforementioned objectives. Said support comprises a rigid plate provided with several transverse folds forming a concavity, intended for serving as support for conduits or wirings, provided with an end portion suitable for the connection thereof to a guide rail and in which a groove is formed; as well as an oblong closing flat bar, intended for being applied on the plate closing the opening of the concavity, provided at a first end with at least one indentation intended for cooperating with the groove of the plate for the retention of the flat bar, and said flat bar being folded over itself at its opposite end forming a hook, which can be inserted in an opening provided for such purpose in the wall of the plate forming the concavity.

The rigid plate can advantageously be obtained by pressing sheet metal, suitably bent and cut without incorporating auxiliary elements connected to the plate by welding for example.

According to another feature of the invention, the mentioned first end of the flat bar is provided with two facing indentations, forming a linking neck between the body of the flat bar and its retention end.

Preferably, the retention end of the flat bar is of lesser width than that of the body of the flat bar and than the length of the groove of the plate.

According to another feature of the invention, the groove formed in the end portion of the plate is vertical, and is provided at its lower end with a flare.

In an embodiment of the device according to the invention, the opening in the wall of the concavity is formed by a cut, immediately above which the plate is slightly bent outwardly, forming an inverted flange in which the hook of the flat bar is secured.

By means of this feature, the hook does not make contact with the supported conduits, preventing their deterioration due to friction with this end of the oblong closing flat bar.

A support system for conduits or wirings is also disclosed, which system is formed by a guide rail and by at least one support device according to the present invention, intended for being fixed to the mentioned guide rail applied on its open face. Essentially, the system is **characterized in that** the guide rail is provided with pairs of through holes in its side walls, the holes of one and the same pair being aligned, and in that the end portion of the plate of the device suitable for the connection thereof to the guide rail is provided with two side flanges bent at an angle, intended for being applied on respective side walls of the guide rail, also provided with respective aligned through holes, which allow securing the device to the guide rail by means of a pin.

### Brief Description of the Drawings

The attached drawings show, by way of non-limiting example, respective variants of the support system and device for conduits or wiring according to the invention. Specifically:
Figure 1 is a perspective view of a support device according to the invention, fixed by means of a pin to a vertical guide rail;
Figure 2 is a plan view of the device of Figure 1 fixed to the guide rail;
Figure 3 is a section view according to plane of section EE of Figure 2, corresponding to a detail of the fixing device, specifically of the securing area of the hook of the closing flat bar in the wall of the concavity, and more specifically in the flange formed in said wall; and
Figure 4 is a perspective view of two examples of the system according to the invention, in which different securing devices with different configurations, fixed to two vertical guide rails are shown.

### Detailed Description of the Drawings

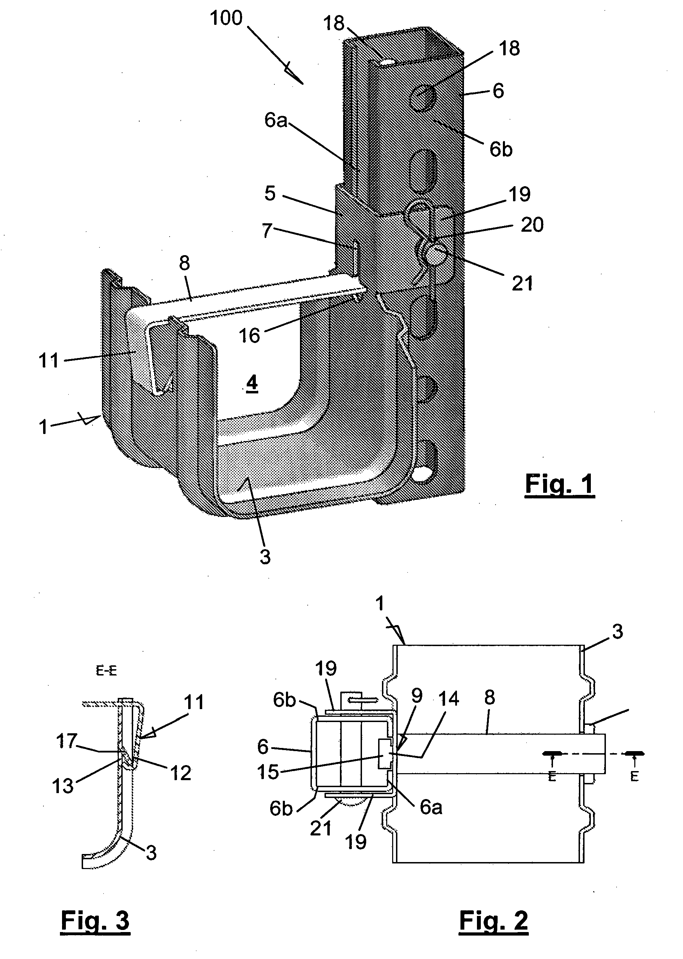

Figure 1 shows a support device 1 comprising a plate 3 obtained by pressing sheet metal material, subjected to a plastic coating or galvanization treatment, provided with several transverse folds forming a concavity 4 intended for serving as support for conduits or wirings.

The plate 3 is provided with an end portion 5 provided with two side flanges 19, bent at an angle, applied on the side walls 6b of the guide rail 6. Both the side flanges 19 and the side walls 6b of the guide rail 6 are provided with respective through holes 20 and 18, respectively, which allow securing the support device 1 to the guide rail 6 by means of a pin 21 when the support device 1 is applied on the guide rail 6 such that the aforementioned through holes 20 and 18 are aligned.

It is seen in Figure 1 that a groove 7 is formed in the end portion 5 of the plate 3, the purpose of which groove 7 is to retain one of the ends of the closing flat bar 8, as will be explained below.

Said closing flat bar 8 is provided at a first end 9 (see Figure 3) with at least two indentations forming a linking neck 14 between the body of the flat bar and its retention end 15. These indentations are intended for cooperating with the groove 7 of the plate 3 for the retention of said flat bar 8 when once the retention end 15 is inserted through the groove 7, the flat bar 8 is rotated out of the plane of the groove 7. In this position, the flat bar 8 is retained by the abutting of its retention end 15 against the outer face of the plate 3. To facilitate the rotation of the flat bar 8 and to allow the passage of a loop-shaped seal, the groove 7 is provided at its lower end with a flare 16.

In the example of Figure 3, it is seen that the retention end 15 of the flat bar 8 is of lesser width than that of the body of the flat bar 8 and, though it is not seen in the drawings, it is naturally of lesser width than the length of the groove 7 of the plate 3 so that its insertion through the latter to the indentations is possible.

As shown in Figure 2, at its opposite end 11, the flat bar 8 is folded over itself forming a hook 12, which can be inserted in a slit 13 provided for such purpose in the wall of the plate 3 forming the concavity 4, and more specifically in the wall opposite the wall the prolongation of which is the end portion 5 for the fixing to the guide rail 6.

The slit 13 in the wall of the plate 3 is formed by a cut immediately above which the wall of the plate 3 is slightly bent outwardly, forming an inverted flange 17 in which the hook 12 of the flat bar 8 is secured.

In the situation in which the retention end 15 is inserted in the groove 7, and in which the hook 12 is simultaneously secured to the flange 17, the flat bar 8 is applied to the concavity 4 closing its opening.

It is seen in Figure 1 that the end edge of the wall of the plate 3 on which the flat bar 8 is supported is provided with a notch of a width similar to that of the flat bar 8 to prevent the movement of the mentioned flat bar 8 in the transverse direction, increasing the stability of the closure.

It is also seen how the plate 3 can be provided with a series of longitudinal slits, the purpose of which is to stiffen the plate 3 in a known manner to prevent the deformation of the concavity 4 due to the effect of the supported weight.

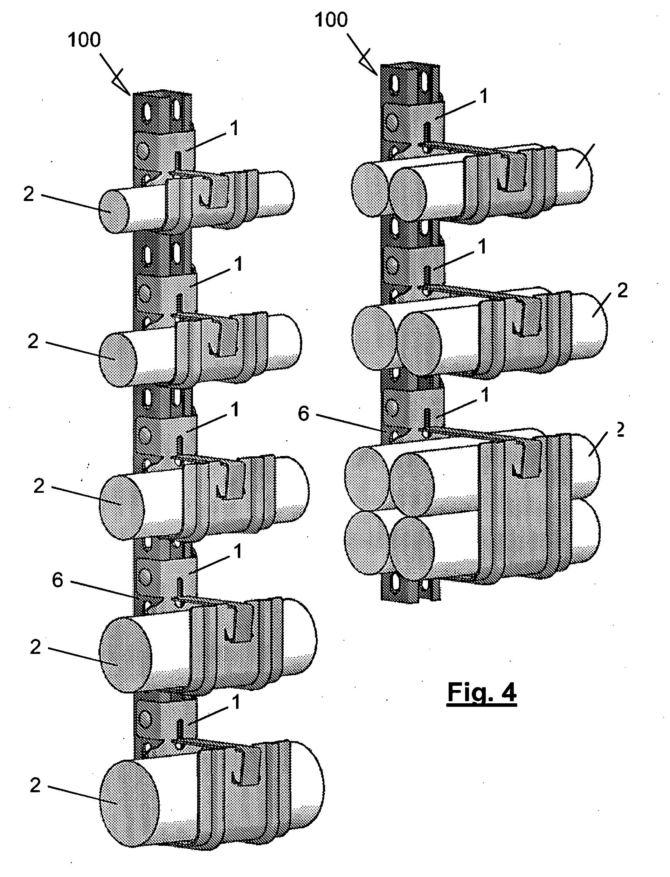

Figure 4 shows two guide rails 6 in each of which support devices 1 with different configurations, according to the volume of the conduits 2 they must support, are fixed.

## Claims

1. A support device (1) for conduits or wirings (2), comprising a rigid plate (3) provided with several transverse folds forming a concavity (4), intended for serving as support for conduits or wirings, provided with an end portion (5) suitable for the connection thereof to a guide rail (6) and in which a groove (7) is formed; and an oblong closing flat bar (8), intended for being applied on the plate closing the opening of the concavity, provided at a first end (9) with at least one indentation intended for cooperating with the groove of the plate for the retention of the flat bar, and said flat bar being folded over itself at its opposite end (11) forming a hook (12), which can be inserted in an opening (13) provided for such purpose in the wall of the concavity **characterized in that** the first end of the flat bar is not parallel to the direction in which the groove extends, when the first end of the flat bar is arranged to cooperate with the groove of the plate for the retention of said flat bar; and wherein the first end is to be rotated together with the flat bar, allowing said first end to be aligned with the direction in which the groove extends, and therefore with the groove, to deactivate the cited cooperation between the first end and the groove and wherein the groove formed in the end portion of the plate is provided at its lower end with a flare (16) facilitating the rotation of the flat bar.

2. The support device (1) according to claim 1, **characterized in that** the first end (9) of the flat bar (8) is perpendicular to the direction in which the groove (7) extends, when the first end of the flat bar is arranged to cooperate with the groove of the plate for the retention of said flat bar.

3. The support device (1) according to any of the claims 1 to 2, **characterized in that** the width of the groove (7) is bigger than the thickness of the first end (9) of the flat bar (8).

4. The support device (1) according to any of the claims 1 to 3, **characterized in that** the mentioned first end (9) of the flat bar (8) is provided with two facing indentations, forming a linking neck (14) between the body of the flat bar and its retention end (15).

5. The support device (1) according to any of the claims 1 to 4, **characterized in that** the retention end (15) of the flat bar is of lesser width than that of the body of the flat bar (8) and than the length of the groove (7) of the plate.

6. The support device (1) according to any one of the previous claims, **characterized in that** the opening (13) in the wall of the concavity (4) is formed by a cut, describing a portion which is slightly bent outwardly, forming an inverted flange (17) in which the hook (12) of the flat bar (8) is secured.

7. The support device (1) according to any of the previous claims, **characterized in that** the end portion (5) of the plate (3) further comprises two side flanges (19), each flange provided with at least one aligned through hole (20).

8. The support device (1) according to the previous claim, **characterized in that** it further comprises a guide rail (6) provided with pairs of aligned through holes (18) in its side walls (6b) placed between the two side flanges (19), one of said pairs of aligned through holes (18) being aligned with the aligned through holes (20) of the side flanges (19); and a pin (21) traversing the aligned through holes (20) of the side flanges (19) and their corresponding aligned pair of aligned through holes (18), securing the guide rail (6) to the side flanges (19).

## Patentansprüche

1. Stützvorrichtung (1) für Leitungen oder Verdrahtungen (2), aufweisend eine starre Platte (3), die mit mehreren Querfalzen versehen ist, die eine Konkavität (4) bilden, die dazu bestimmt ist, als Stütze für Leitungen oder Verdrahtungen zu dienen, die mit einem Endabschnitt (5) versehen ist, der sich zu deren Anschluss an eine Führungsschiene (6) eignet, und in dem eine Nut (7) ausgebildet ist; und einen länglichen Verschlussbandstab (8), der dazu bestimmt ist, an die Platte unter Verschließen der Öffnung der Konkavität angelegt zu werden, der an einem ersten Ende (9) mit mindestens einer Einbuchtung versehen ist, um mit der Nut der Platte zum Rückhalt des Bandstabs zusammenzuwirken, und wobei der Bandstab an seinem entgegengesetzten Ende (11) über sich selbst gefalzt ist, wodurch ein Haken (12) gebildet ist, der in eine Öffnung (13) eingesetzt werden kann, die für einen solchen Zweck in der Wand der Konkavität vorgesehen ist, **dadurch gekennzeichnet, dass** das erste Ende des Bandstabs nicht parallel zu der Richtung ist, in der sich die Nut erstreckt, wenn das erste Ende des Bandstabs angeordnet ist, um mit der Nut der Platte zum Rückhalt des Bandstabs zusammenzuwirken; und wobei das erste Ende zusammen mit dem Bandstab zu drehen ist, wodurch sich das erste Ende mit der Richtung, in der sich die Nut erstreckt und deshalb mit der Nut ausrichten lässt, um die angegebene Zusammenwirkung zwischen dem ersten Ende und der Nut zu deaktivieren, und wobei die im Endabschnitt der Platte ausgebildete Nut an ihrem unteren Ende mit einer die Drehung des Bandstabs ermöglichende Aufweitung (16) versehen ist.

2. Stützvorrichtung (1) nach Anspruch 1, **dadurch gekennzeichnet, dass** das erste Ende (9) des Bandstabs (8) senkrecht zu der Richtung ist, in der sich die Nut (7) erstreckt, wenn das erste Ende des Bandstabs angeordnet ist, um mit der Nut der Platte zum Rückhalt des Bandstabs zusammenzuwirken.

3. Stützvorrichtung (1) nach einem der Ansprüche 1 bis 2, **dadurch gekennzeichnet, dass** die Breite der Nut (7) größer ist als die Dicke des ersten Endes (9) des Bandstabs (8).

4. Stützvorrichtung (1) nach einem der Ansprüche 1 bis 3, **dadurch gekennzeichnet, dass** das erwähnte erste Ende (9) des Bandstabs (8) mit zwei einander zugewandten Einbuchtungen versehen ist, die einen Verbindungshals (14) zwischen dem Körper des Flachbands und seinem Rückhalteende (15) bilden.

5. Stützvorrichtung (1) nach einem der Ansprüche 1 bis 4, **dadurch gekennzeichnet, dass** das Rückhalteende (15) des Bandstabs von geringerer Breite ist als der Körpers des Bandstabs (8) und als die Länge der Nut (7) der Platte.

6. Stützvorrichtung (1) nach einem der vorhergehenden Ansprüche, **dadurch gekennzeichnet, dass** die Öffnung (13) in der Wand der Konkavität (4) durch einen Einschnitt gebildet ist, der einen Abschnitt beschreibt, der leicht nach außen gebogen ist, wodurch ein umgekehrter Flansch (17) gebildet ist, in dem der Haken (12) des Bandstabs (8) festsitzt.

7. Stützvorrichtung (1) nach einem der vorhergehenden Ansprüche, **dadurch gekennzeichnet, dass** der Endabschnitt (5) der Platte (3) darüber hinaus zwei Seitenflansche (19) aufweist, wobei jeder Flansch mit mindestens einer ausgerichteten Durchgangsöffnung (20) versehen ist.

8. Stützvorrichtung (1) nach dem vorhergehenden Anspruch, **dadurch gekennzeichnet, dass** sie darüber hinaus eine Führungsschiene (6) aufweist, die mit Paaren ausgerichteter Durchgangsöffnungen (18) in ihren Seitenwänden (6b) versehen ist, die zwischen den zwei Seitenflanschen (19) angeordnet sind, wobei eines der Paare ausgerichteter Durchgangsöffnungen (18) mit den ausgerichteten Durchgangsöffnungen (20) der Seitenflansche (19) ausgerichtet ist; und ein Stift (21) die ausgerichteten Durchgangsöffnungen (20) der Seitenflansche (19) und deren entsprechendes ausgerichtetes Paar ausgerichteter Durchgangsöffnungen (18) durchquert, wodurch die Führungsschiene (6) an den Seitenflanschen (19) gesichert ist.

## Revendications

1. Dispositif support (1) pour des conduites ou des câblages (2), comprenant une plaque rigide (3) pourvue de plusieurs plis transversaux formant une cavité (4), destiné à servir de support pour des conduites ou des câblages, pourvu d'une portion d'extrémité (5) apte à le relier à un rail de guidage (6) et dans lequel une rainure (7) est formée ; et une barre plate de fermeture oblongue (8), destinée à être appliquée sur la plaque fermant l'ouverture de la concavité, pourvue à une première extrémité (9) d'au moins une indentation destinée à coopérer avec la rainure de la plaque pour la rétention de la barre plate, et ladite barre plate étant repliée sur elle-même à son extrémité opposée (11) en formant un crochet (12) qui peut être inséré dans une ouverture (13) fournie à cet effet dans la paroi de la concavité, **caractérisé en ce que** la première extrémité de la barre plate n'est pas parallèle au sens d'extension de la rainure, lorsque la première extrémité de la barre plate est agencée pour coopérer avec la rainure de la plaque pour la rétention de ladite barre plate ; et dans lequel la première extrémité doit être tournée avec la barre plate, en permettant à ladite première extrémité d'être alignée avec le sens d'extension de la rainure et donc avec la rainure pour désactiver ladite coopération entre la première extrémité et la rainure et dans lequel la rainure formée dans la portion d'extrémité de la plaque est pourvue à son extrémité inférieure d'un évasement (16) permettant la rotation de la barre plate.

2. Dispositif support (1) selon la revendication 1, **caractérisé en ce que** la première extrémité (9) de la barre plate (8) est perpendiculaire au sens d'extension de la rainure (7), lorsque la première extrémité de la barre plate est agencée pour coopérer avec la rainure de la plaque pour la rétention de ladite barre plate.

3. Dispositif support (1) selon l'une quelconque des revendications 1 et 2, **caractérisé en ce que** la largeur de la rainure (7) est supérieure à l'épaisseur de la première extrémité (9) de la barre plate (8).

4. Dispositif support (1) selon l'une quelconque des revendications 1 à 3, **caractérisé en ce que** la première extrémité mentionnée (9) de la barre plate (8) est pourvue de deux indentations se faisant face, constituant une encolure de liaison (14) entre le corps de la barre plate et son extrémité de rétention (15).

5. Dispositif support (1) selon l'une quelconque des revendications 1 à 4, **caractérisé en ce que** la largeur de l'extrémité de rétention (15) de la barre plate est inférieure à celle du corps de la barre plate (8) et est inférieure à la longueur de la rainure (7) de la plaque.

6. Dispositif support (1) selon l'une quelconque des revendications précédentes, **caractérisé en ce que** l'ouverture (13) dans la paroi de la concavité (4) est constituée par une coupure, décrivant une portion légèrement pliée vers l'extérieur, formant une bride inversée (17) dans laquelle est fixé le crochet (12) de la barre plate (8).

7. Dispositif support (1) selon l'une quelconque des revendications précédentes, **caractérisé en ce que** la portion d'extrémité (5) de la plaque (3) comprend en outre deux brides latérales (19), chaque bride étant pourvue d'au moins un trou traversant aligné (20).

8. Dispositif support (1) selon la revendication précédente, **caractérisé en ce qu'**il comprend en outre un rail de guidage (6) pourvu de paires de trous traversants alignés (18) dans ses parois latérales (6b) placées entre les deux brides latérales (19), l'une desdites paires de trous traversants alignés (18) étant alignée avec les trous traversants alignés (20) des brides latérales (19) ; et une broche (21) traversant les trous traversants alignés (20) des brides latérales (19) et leur paire alignée correspondante de trous traversants alignés (18), fixant le rail de guidage (6) sur les brides latérales (19).
